Europäisches Patentamt

European Patent Office

Office européen des brevets

(19)

(11) Veröffentlichungsnummer: **0 081 524**
**B1**

(12) **EUROPÄISCHE PATENTSCHRIFT**

(45) Veröffentlichungstag der Patentschrift:
**29.01.86**

(51) Int. Cl.⁴: **H 02 K 1/28**

(21) Anmeldenummer: **82901783.9**

(22) Anmeldetag: **29.05.82**

(86) Internationale Anmeldenummer:
**PCT/DE 82/00117**

(87) Internationale Veröffentlichungsnummer:
**WO 82/04505** (23.12.82 Gazette 82/30)

(54) **ROTOR FÜR EINE PERMANENTMAGNETISCH ERREGTE ELEKTRISCHE MASCHINE.**

(30) Priorität: **10.06.81 DE 3122870**

(43) Veröffentlichungstag der Anmeldung:
**22.06.83 Patentblatt 83/25**

(45) Bekanntmachung des Hinweises auf die Patenterteilung:
**29.01.86 Patentblatt 86/5**

(84) Benannte Vertragsstaaten:
**CH DE FR GB LI SE**

(56) Entgegenhaltungen:
EP - A - 0 013 157
EP - A - 0 043 981
EP - A - 0 044 592
DE - A - 2 505 937
DE - A - 2 641 536
DE - A - 2 727 827
DE - C - 578 799
DE - U - 1 978 272
FR - A - 1 314 947
FR - A - 1 388 922
FR - A - 2 018 172
FR - A - 2 457 031
US - A - 4 116 906
US - A - 4 117 360

(73) Patentinhaber: **ROBERT BOSCH GMBH, Postfach 50, D-7000 Stuttgart 1 (DE)**

(72) Erfinder: **CORBACH, Rainer, Amthaus 2, D-4710 Lüdinghausen (DE)**
Erfinder: **MOHR, Adolf, Eichendorff-Weg 21, D-7582 Bühlertal (DE)**
Erfinder: **KONSTAS, Georgios, Alfons-Duffner-Weg 17, D-7582 Bühlertal (DE)**

(74) Vertreter: **Röser, Peter, c/o Robert Bosch GmbH Robert-Bosch-Platz 1, D-7016 Gerlingen-Schillerhöhe (DE)**

## Beschreibung

### Stand der Technik

Die Erfindung geht aus von einem Rotor für eine permanentmagnetisch erregte elektrische Maschine wie sie durch die EP-A 43 981 gemäss Artikel 54(3)EPÜ zum Stand der Technik gehört. Diese Druckschrift zeigt einen dauermagnetisch erregten Läufer für eine elektrische Maschine, welcher aus ferromagnetischem Material besteht und an seinem Umfang schalen- oder plattenförmige Dauermagnete trägt, welche durch Kleben und/oder durch um die Dauermagnete gelegte Befestigungsmittel auf der Oberfläche des Rotors befestigt sind. Die Druckschrift beschreibt weder die Verwendung eines mit Permanentmagnetpulver vermischten Klebstoffes noch das Tränken einer um die Magnetsegmente gewickelten Bandage mit einem derartigen Klebstoff.

Aus der DE-OS 2 641 536 ist ein Rotor für eine permanentmagnetisch erregte elektrische Maschine bekanntgeworden, bei dem die Magnetsegmente innerhalb eines becherförmigen Schwungrades angeordnet sind und von ringförmigen Klemmelementen gehalten werden. Zusätzlich können die Magnete noch durch ein Klebemittel festgelegt sein zwischen der Innenfläche des Schwungrades und der Aussenfläche der Magnete. Eine derartige Anordnung ist aufwendig und teuer herzustellen.

Ausserdem ist es aus dem DE-GM 1 978 272 bekannt, Permanentmagnete innen am Ständer einer elektrischen Maschine durch ein Klebemittel zu befestigen, dem pulverisiertes Metall beigemengt ist. Hierdurch wird die magnetische Leitfähigkeit zwischen den Magnetkörpern und dem Eisenrückschlusskörper erhöht. Die Anordnung der Permanentmagnete im Ständer bedingt jedoch einen Rotor mit Stromwender, so dass die Gesamtanordnung wiederum relativ aufwendig ist.

Schliesslich ist es aus der FR-A 2 018 172 bekannt, den Rotor für eine permanentmagnetisch erregte elektrische Maschine mit permanentmagnetischen Segmenten aufzubauen, welche mittels eines Klebers und einer Bandage auf einem ferromagnetischen Teil des Läufers befestigt sind. Weder der Kleber noch die Bandage enthalten hierbei Permanentmagnetpulver, die Bandage setzt sich aus magnetischen und nichtmagnetischen Bereichen zusammen.

### Vorteile der Erfindung

Der erfindungsgemässe Rotor mit den Merkmalen des Hauptanspruches hat gegenüber den vorbekannten Bauformen den Vorteil, dass bei einem besonders einfachen und preiswerten Gesamtaufbau der Maschine keine nachteilige Erhöhung des magnetischen Widerstandes im gesamten magnetischen Kreis in Kauf genommen werden muss. Der Luftspalt wird durch die vorgeschlagene Gestaltung praktisch nicht vergrössert, so dass sich eine zuverlässige und wirtschaftliche Gesamtanordnung ergibt mit kleinem magnetischem Luftspalt und relativ grossen zulässigen Toleranzen für die Fertigung der Magnete. Durch die Verwendung eines mit Permanentmagnetpulver vermischten Klebstoffes zum Kleben der Permanentmagnete und/oder zum Tränken einer um die Magnetsegmente gewickelten Bandage gehören auch diese Bereiche zum aktiven Bereich der Maschine und erhöhen nicht den Luftspaltwiderstand.

Zur Erzeugung eines magnetisierbaren Klebstoffes wird diesem zweckmässigerweise Permanentmagnetpulver beigemengt, welches z.B. beim Schleifvorgang der Magnete entsteht.

Besonders hat sich bewährt, wenn die Magnetsegmente nicht absolut starr sondern mit geringer Elastizität auf dem Eisenträger befestigt sind, so dass die auftretenden Momente durch Fliehkraft und Beschleunigung sowie die thermischen Beanspruchungen ohne Beeinträchtigung der Haftung der Magnete aufgenommen werden.

Eine Gesamtanordnung mit besonders hohem Raumnutzungsgrad entsteht dadurch, dass die Magnetsegmente direkt aneinander anschliessend über dem gesamten Umfang des Eisenträgers angeordnet sind. Hierbei können zusätzlich die durch Fertigungstoleranzen bedingten schmalen Spalte zwischen den einzelnen Magnetsegmenten mit dem gleichen magnetisierbaren Klebstoff gefüllt werden, welcher auch zum Aufkleben der Segmente verwendbar ist. Weiterhin können mit diesem Klebstoff auch die Vertiefungen ausgefüllt werden, welche durch fertigungsbedingte Abschrägungen der Magnetkanten entstehen. Man erhält so eine praktisch homogene, magnetisierbare Oberfläche des Rotors.

Eine besonders vorteilhafte Gestaltungsmöglichkeit eines Rotors für eine permanentmagnetisch erregte Maschine ergibt sich dadurch, dass die Magnetsegmente schräg zur Motorachsrichtung aufmagnetisiert werden. Hierbei kann über die Grenze der einzelnen Magnetsegmente schräg hinweg die Aufmagnetisierung erfolgen. Auf diese Weise erreicht man eine Maschinenkonstruktion mit besonders geringen Geräuschen und mit besonders kleinen Klebemomenten, d.h. dass die magnetischen Leitwertschwankungen entlang dem Umfang des Rotors gering sind, so dass sich geringe Rastermomente beim Durchdrehen des Rotors ergeben.

### Zeichnung

Ausführungsbeispiele der Erfindung sind in der Zeichnung dargestellt und in der nachfolgenden Beschreibung näher erläutert. Es zeigen:

Fig. 1 eine Draufsicht auf einen mit einer Bandage versehenen Rotor,

Fig. 2 eine Draufsicht auf einen schräg aufmagnetisierten Rotor und

Fig. 3 einen Teilschnitt durch den Rotor im Bereich zweier aneinandergrenzender Magnetsegmente.

### Beschreibung der Ausführungsbeispiele

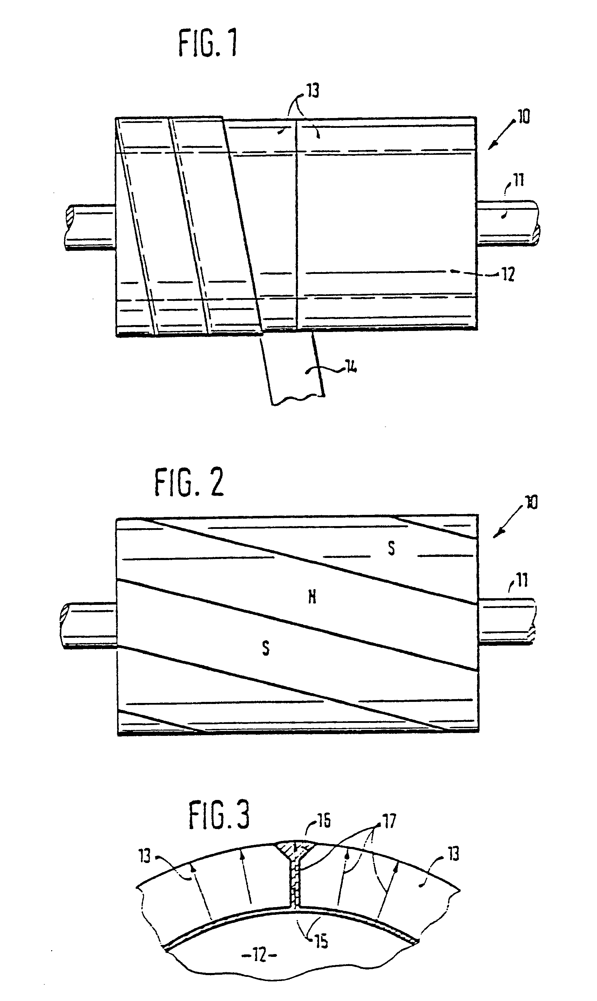

Fig. 1 zeigt einen Rotor 10 einer permanentmagnetisch erregten elektrischen Maschine, mit einer Welle 11, auf der ein als Weicheisendorn ausgebildeter Eisenträger 12 sitzt. Der Rotor ist bestimmt für einen kollektorlosen, elektronisch gesteuerten Synchronmotor. Magnetsegmente 13 sind auf dem Umfang des Weicheisendorns befestigt mittels einer Bandage 14, welche entweder als einziges Befestigungsmittel dienen kann oder als zusätzliches Befestigungsmittel zu einer Klebeverbindung zwischen den Magnetsegmenten 13 und dem Weicheisendorn 12. Als Klebstoff wird ein Zweikomponentenklebstoff verwendet, welchem Permanentmagnetpulver beigemischt ist, so dass auch der Klebstoffbereich magnetisierbar wird.

Fig. 2 zeigt den Rotor ohne die Bandage 14 in einer speziellen Gestaltung, bei der die einzelnen Magnetsegmente 13 ohne sichtbare Fugen aneinanderstossen und schräg zur Rotorachsrichtung aufmagnetisiert sind. Die verschiedenen magnetischen Bereiche sind entsprechend den gebildeten Nord- und Südpolen mit N und S bezeichnet.

Fig. 3 zeigt in vergrösserter Darstellung das Verkleben zwischen dem Weicheisendorn 12 und den Magnetsegmenten 13 einerseits und das Ausfüllen der Spalten zwischen den Magnetsegmenten 13 mit dem magnetisierbaren Klebstoff 15. Weiterhin sind auch die an den Magnetkanten entstehenden Vertiefungen 16 mit dem magnetisierbaren Klebstoff gefüllt. Diese Vertiefungen 16 sind fertigungsbedingt durch die sogenannten Anfasungen der Magnetkanten, das sind Abschrägungen, welche das Pressen der Magnetsegmente erleichtern.

Durch die erfindungsgemässen Massnahmen wird es möglich, einen Rotor für kollektorlose Motoren grösserer Leistung besonders einfach und mit geringen magnetischen Verlusten aufzubauen, wobei das Problem der Magnetbefestigung ohne nennenswerte magnetische Verluste gelöst worden ist. Insbesondere durch die verbleibende geringe Elastizität des ausgehärteten Klebstoffes 15 wird es auch möglich, die unterschiedlichen Wärmeausdehnungskoeffizienten von Eisen und Permanentmagnetmaterial zu beherrschen. Trotz der Verwendung der erfindungsgemässen Bandage 14 wird der Luftspalt im Motor praktisch nicht vergrössert, weil die Bandage mit dem magnetisierbaren Kleber getränkt ist und somit zum magnetisch wirksamen Teil gerechnet werden kann. Die Bandage 14 stellt eine magnetisierbare Auflage auf den Magnetsegmenten dar, d.h., dass der Luftspalt bei dieser Art der Magnetbefestigung nur ganz unwesentlich beeinflusst wird. Man wird zweckmässigerweise den magnetisierbaren Klebstoff in einem magnetischen Feld 17 aushärten lassen, um eine gewisse Anisotropie des Pulvers und damit eine Flusssteigerung zu erreichen. Hierdurch erreicht man eine Angleichung der magnetischen Werte der Magnete selbst und der Klebestellen, wodurch z.B. bei Vorschubantrieben die Haltegenauigkeit erhöht wird. Das Aushärten des magnetisierbaren Klebers 15 erfolgt in einem in Fig. 3 angedeuteten Ausrichtfeld 17, welches in sehr einfacher und vorteilhafter Weise durch eine zweipolige Aufmagnetisierung der Gesamtanordnung erzeugt wird. Nach dem Aushärten des magnetisierbaren Klebers 15 erfolgt die endgültige Magnetisierung, z.B. in der in Fig. 2 gezeigten Weise.

Bei kollektorlosen Motoren, wie sie beispielsweise für Vorschubantriebe von Werkzeugmaschinen und ähnliche Anwendungen benötigt werden, sind besonders kleine Klebemomente erforderlich, d.h. besonders kleine magnetische Leitwertschwankungen entlang des Umfangs von Rotor und/oder Ständer.

Durch die vorgeschlagene schräge Magnetisierung der am Rotorumfang praktisch lückenlos angeordneten Magnetsegmente wird das Kleben und das magnetische Geräusch der Maschine erheblich verringert, da die axial verlaufende Spalte und die schlagartige Umkehr der Magnet-Polung im Rotor verschwunden sind.

Die Verwendung des magnetisierbaren Klebstoffes 15 bringt den bereits erwähnten weiteren wesentlichen Vorteil, dass bei der Herstellung der Magnetsegmente grössere Toleranzen zugelassen werden können, was den Ausschuss bei der Fertigung und die Fertigungskosten erheblich verringert. Ohne diese zulässigen Toleranzen müssten die Magnete annähernd mit Nulltoleranz gefertigt werden, wenn sie am Umfang des Eisendorns 12 einwandfrei anliegen sollen. Da im Bereich der Spalte zwischen den Magnetsegmenten 13 auch die fertigungsbedingten Vertiefungen 16 liegen, können beide Störungeen des magnetischen Kreises gemeinsam durch Einfüllen des magnetischen Klebstoffes 15 behoben werden. Der gesamte Magnetkörper wird damit homogen und weist keine axial verlaufenden magnetischen Unterschiede mehr auf. Wird der magnetisierbare Klebstoff 15 auch noch zum Aufkleben der Magnetsegmente 13 auf den Weicheisendorn 12 benutzt, so können zusätzliche Luftspalte im magnetischen Kreis vollständig vermieden werden, was zu einer wesentlichen Flusserhöhung im Motor führt.

**Patentansprüche**

1. Rotor für eine permanentmagnetisch erregte elektrische Maschine, insbesondere für einen kollektorlosen, permanentmagnetisch erregten Synchronmotor, bei dem Magnetsegmente (13) aussen auf einem rotierenden Eisenträger (12) durch Kleben und/oder durch ein magnetisches Befestigungsmittel gehalten sind, wobei ein mit Permanentmagnetpulver vermischter Klebstoff (15) zum Kleben und/oder zum Tränken einer um die Magnetsegmente gewickelten Bandage (14) als Befestigungsmittel verwendet wird.

2. Rotor nach Anspruch 1, dadurch gekennzeichnet, dass die Magnetsegmente (13) mit geringerer Elastizität auf dem Eisenträger (12) befestigt sind.

3. Rotor nach Anspruch 1 oder 2, dadurch gekennzeichnet, dass die Bandage (14) aus Kunststoff- und/oder Glasfaser- und/oder Kohlefaserband besteht.

4. Rotor nach einem der vorhergehenden Ansprüche, dadurch gekennzeichnet, dass die Magnetsegmente (13) auf den Eisenträger (12) mit einem Klebstofff (15), vorzugsweise einem Zweikomponentenklebstoff, aufgeklebt sind, welcher mit Permanentmagnetpulver vermischt ist.

5. Rotor nach einem der vorhergehenden Ansprüche, dadurch gekennzeichnet, dass die Magnetsegmente (13) direkt aneinander anschliessend über dem gesamten Umfang des Eisenträgers (12) angeordnet sind und dass die Spalte zwischen den Magnetsegmenten (13) mit dem magnetisierbaren Klebstoff (15) gefüllt sind.

6. Rotor nach einem der vorhergehenden Ansprüche, dadurch gekennzeichnet, dass mit dem magnetisierbaren Klebstoff (15) die durch die Anfasungen der Magnetsegmente (13) entstehenden Vertiefungen (16) ausgefüllt sind.

7. Rotor für eine permanentmagnetisch erregte Maschine, insbesondere für einen kollektorlosen, permanentmagnetisch erregten Synchronmotor, bei dem die Magnetsegmente vorzugsweise direkt aneinander anschliessend über dem gesamten Urnfang eines Eisenträgers angeordnet sind nach einem der vorhergehenden Ansprüche, dadurch gekennzeichnet, dass die Magnetsegmente (13) schräg zur Rotorachsrichtung aufmagnetisiert sind.

8. Rotor nach einem der vorhergehenden Ansprüche, dadurch gekennzeichnet, dass der magnetisierbare Klebstoff (15) zur Erzielung einer Anisotropie in einem magnetischen Feld (17) ausgehärtet wird.

## Claims

1. Rotor for a permanent-magnetically excited electrical machine, in particular for a collectorless, permanent-magnetically excited synchronous motor, in wich magnet segments (13) are mounted outside on a rotating iron carrier (12) by means of adhesive bonding and/or by means of a magnetic fixing agent, an adhesive (15) mixed with permanent-magnetic powder being used for adhesive bonding and/or for impregnating a bandage (14), wound around the magnet segments, as the fixing agent.

2. Rotor according to Claim 1, characterised in that the magnet segments (13) are fixed to the iron carrier (12) with low elasticity.

3. Rotor according to Claim 1 or 2, characterised in that the bandage (14) consists of a tape of plastic and/or glass fibres and/or carbon fibres.

4. Rotor according to one of the preceding claims, characterised in that the magnet segments (13) are adhesively bonded to the iron carrier (12) by means of an adhesive (15), preferably a two-component adhesive, which is mixed with permanent-magnetic powder.

5. Rotor according to one of the preceding claims, characterised in that the magnet segments (13) are arranged immediately adjoining one another over the entire periphery of the iron carrier (12) and that the gaps between the magnet segments (13) are filled with the magnetisable adhesive (15).

6. Rotor according to one of the preceding claims, characterised in that the recesses (16) produced by chamferings of the magnet segments (13) are filled with the magnetisable adhesive (15).

7. Rotor for a permanent-magnetically excited machine, in particular for a collectorless, permanent-magnetically excited synchronous motor, in which the magnet segments are arranged, preferably immediately adjoining one another, over the entire periphery of an iron carrier, according to one of the preceding claims, characterised in that the magnet segments (13) are magnetised at an angle to the direction of the rotor axis.

8. Rotor according to one of the preceding claims, characterised in that the magnetisable adhesive (15) is cured in a magnetic field (17) in order to obtain an anisotropy.

## Revendications

1. Rotor pour une machine électrique ecxitée par des aimants permanents, notamment pour un moteur synchrone sans collecteur, excité par des aimants permanents, rotor dans lequel les segments d'aimant (13) sont maintenus à l'extérieur sur un support rotatif en fer (12) par collage et/ou par un moyen de fixation magnétique, rotor caractérisé en ce qu'une colle (15) mélangée avec de la poudre d'aimant permanent est utilisée pour le collage et/ou pour l'imprégnation d'un bandage (14) enroulé autour des segments d'aimants et servant de moyen de fixation.

2. Rotor selon la revendication 1, caractérisé en ce que les segments d'aimant (13) sont fixés avec une élasticité réduite sur le support en fer (12).

3. Rotor selon la revendication 1 ou 2, caractérisé en ce que le bandage (14) est constitué par une bande en matière plastique, et/ou par une bande en fibres de verre, et/ou par une bande en fibres de carbone.

4. Rotor selon une des précédentes revendications, caractérisé en ce que les segments d'aimant (13) sont collés sur le support de fer (12) avec une colle (15), de préférence une colle à deux composants, qui est mélangée avec de la poudre d'aimant magnétique.

5. Rotor selon une des précédentes revendications, caractérisé en ce que les segments d'aimant (13) sont disposés en se raccordant directement l'un à l'autre sur la totalité de la périphérie du support de fer (12), et que les fentes entre les segments d'aimant (13) sont remplies avec la colle magnétisable (15).

6. Rotor selon une des précédentes revendicatins, caractérisé en ce que les cavités (16), résultant des chanfreinages des segments d'aimant (13), sont remplies avec la colle magnétisable (15).

7. Rotor pour une machine excitée par des aimants permanents, notamment pour un moteur synchrone sans collecteur excité par des aimants permanents, rotor dans lequel les segments d'aimant sont disposés de préférence en se raccordant directement l'un à l'autre sur la totalité de la périphérie d'un support de fer, selon une des précédentes revendications, rotor caractérisé en ce que les segments d'aimant (13) sont magnétisés obliquement par rapport à la direction de l'axe du rotor.

8. Rotor selon une des précédentes revendications, caractérisé en ce que la colle magnétisable (15) est durcie dans un champ magnétique (17) pour obtenir une anisotropie.

FIG. 1

FIG. 2

FIG. 3